# EUROPEAN PATENT APPLICATION

(11) **EP 4 714 252 A1**
(43) Date of publication of application: **25.03.2026**
(21) Application number: 25201144.0
(22) Date of filing: 09.09.2025
(51) Int. Cl.: A01D 41/127, A01D 45/02

(54) **CROP LOSS MONITORING SYSTEM FOR AN AGRICULTURAL HARVESTER**

(30) Priority: 20.09.2024 US 202418891646
(71) Applicant: CNH Industrial Belgium N.V., 8210 Zedelgem (BE); CNH Industrial America LLC, New Holland, PA 17557 (US)
(72) Inventor: Martin, Jethro, New Holland, 17557 (US); Linde, Karl Robert, New Holland, 17557 (US); Walker, Eric Lee, New Holland, 17557 (US); Jongmans, Dré W.J., 8210 Zedelgem (BE)
(74) Representative: CNH Industrial IP Department

(57) **Abstract**

A crop loss monitoring system (300) for an agricultural harvester (100) includes a controller (302) configured to receive a left sensor signal from a left sensor (316) indicative of crop particle impacts on a left side of a row unit (208) and to receive a right sensor signal from a right sensor (318) indicative of crop particle impacts on a right side of the row unit (208). Furthermore, the controller (302) is configured to determine whether the row unit (208) is misaligned to a left side of a row of agricultural crops or to a right side of the row of agricultural crops. The controller (302) is configured to determine crop loss based on feedback from the left sensor (316) alone in response to determining the row unit (208) is misaligned to the left side, and to determine the crop loss based on feedback from the right sensor (318) alone in response to determining the row unit (208) is misaligned to the right side.

## Description

### BACKGROUND

The present disclosure relates generally to a crop loss monitoring system for an agricultural harvester.

An agricultural harvester may be used to harvest agricultural crops, such as barley, beans, beets, carrots, corn, cotton, flax, oats, potatoes, rye, soybeans, wheat, or other plant crops. The agricultural harvester may include a header, which may be configured to efficiently harvest certain types of crops. For example, a corn header may be configured to efficiently harvest corn. The corn header may include row units that include components configured to separate ears of corn from stalks as the agricultural harvester travels through a field. Augers carry the ears of corn toward a processing system of the agricultural harvester, and the stalks are deposited on the field.

Each row unit is configured to separate the corn ear from the stalk, carry the corn ear toward a respective auger, and direct the stalk to the field. For example, each row unit may include a pair of feed rollers configured to grip the stalk and to rotate in opposite directions, thereby driving the stalk rearwardly and toward the field. Each row unit may also include a pair of deck plates positioned over the pair of feed rollers. The pair of deck plates are separated from one another along a lateral axis to define a gap. The spacing between the pair of deck plates may be manually controlled so the gap is sized to enable the stalk to pass through the gap and to block the corn ear from passing through the gap. During a harvesting operation, crop loss may be monitored to improve operational performance. For example, to monitor crop loss, a sensor may be positioned on a side of a row unit, and crop particle impacts on the sensor may be monitored to determine the crop loss.

### BRIEF DESCRIPTION

In certain embodiments, a crop loss monitoring system for an agricultural harvester includes a controller having a memory and a processor. The controller is configured to receive a left sensor signal from a left sensor indicative of crop particle impacts on a left side of a row unit of the agricultural harvester, in which the left sensor is configured to be positioned on the left side of the row unit. The controller is also configured to receive a right sensor signal from a right sensor indicative of crop particle impacts on a right side of the row unit, opposite the left side, in which the right sensor is configured to be positioned on the right side of the row unit. Furthermore, the controller is configured to determine whether the row unit is misaligned to a left side of a row of agricultural crops within a field or to a right side of the row of agricultural crops. In addition, the controller is configured to determine crop loss based on feedback from the left sensor alone in response to determining the row unit is misaligned to the left side of the row of agricultural crops, and to determine the crop loss based on feedback from the right sensor alone in response to determining the row unit is misaligned to the right side of the row of agricultural crops. The controller is also configured to output a signal indicative of the crop loss.

### BRIEF DESCRIPTION OF THE DRAWINGS

These and other features, aspects, and advantages of the present disclosure will become better understood when the following detailed description is read with reference to the accompanying drawings in which like characters represent like parts throughout the drawings, wherein:
FIG. 1 is a side view of an embodiment of an agricultural harvester having a corn header;
FIG. 2 is a perspective view of an embodiment of a corn header that may be employed within the agricultural harvester of FIG. 1;
FIG. 3 is a perspective view of a portion of the corn header of FIG. 2;
FIG. 4 is a block diagram of an embodiment of a crop loss monitoring system that may be employed within the agricultural harvester of FIG. 1; and
FIG. 5 is a flow diagram of an embodiment of a method for determining crop loss based on feedback from a left sensor and a right sensor of a row unit sensor pair.

### DETAILED DESCRIPTION

One or more specific embodiments of the present disclosure will be described below. In an effort to provide a concise description of these embodiments, all features of an actual implementation may not be described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," "the," and "said" are intended to mean that there are one or more of the elements. The terms "comprising," "including," and "having" are intended to be inclusive and mean that there may be additional elements other than the listed elements. Any examples of operating parameters and/or environmental conditions are not exclusive of other parameters/conditions of the disclosed embodiments.

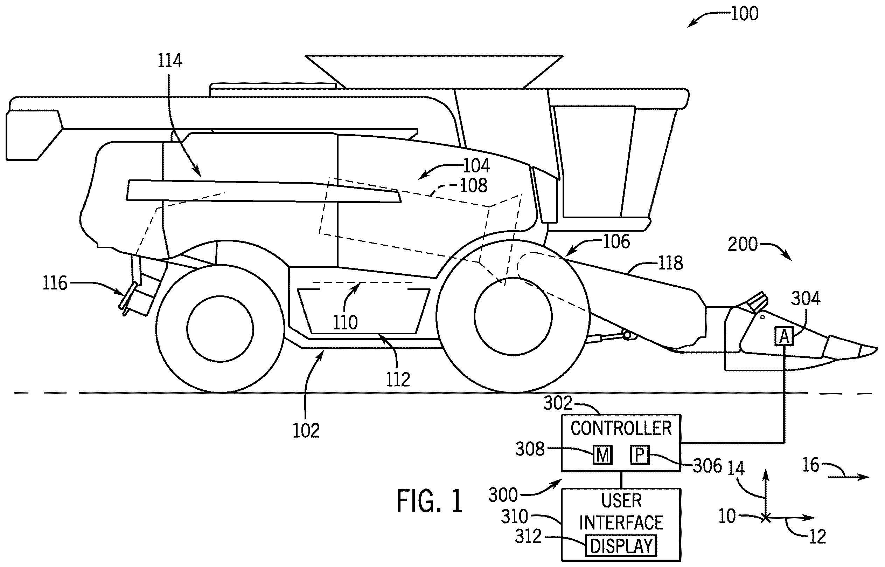

FIG. 1 is a side view of an embodiment of an agricultural harvester 100 having a corn header 200 (e.g., agricultural header). The agricultural harvester 100 includes a chassis 102 configured to support the corn header 200 and an agricultural crop processing system 104. As described in greater detail below, the corn header 200 is configured to separate ears of corn from stalks and to transport the ears of corn toward an inlet 106 of the agricultural crop processing system 104 for further processing of the ears of corn. The agricultural crop processing system 104 receives the ears of corn from the corn header 200 and separates desired crop material from crop residue. For example, the agricultural crop processing system 104 may include a thresher 108 having a cylindrical threshing rotor that transports the ears of corn in a helical flow path through the agricultural harvester 100. In addition to transporting the ears of corn, the thresher 108 may separate certain desired crop material (e.g., corn kernels) from the crop residue, such as husks and cobs, and enable the desired crop material to flow into a cleaning system 110 located beneath the thresher 108. The cleaning system 110 may remove debris from the desired crop material and transport the desired crop material to a storage compartment 112 within the agricultural harvester 100. The crop residue may be transported from the thresher 108 to a crop residue handling system 114, which may remove the crop residue from the agricultural harvester 100 via a crop residue spreading system 116 positioned at the aft end of the agricultural harvester 100.

The corn header 200 includes multiple row units configured to separate ears of corn from stalks, thereby leaving bare stalks engaged with the soil. The ears of corn are directed toward the inlet 106. As discussed in detail below, each row unit includes a pair of feed rollers configured to grip the stalk and to rotate in opposite directions, thereby driving the stalk rearwardly and toward the field. In addition, each row unit includes a pair of deck plates positioned over the pair of feed rollers. The pair of deck plates are separated from one another to define a gap. Furthermore, each row unit includes a pair of chains that are configured to drive or push the corn ear along the pair of deck plates. To facilitate discussion, the agricultural harvester 100 and/or its components (e.g., the corn header 200) may be described with reference to a lateral axis or direction 10, a longitudinal axis or direction 12, and a vertical axis or direction 14. The agricultural harvester 100 and/or its components (e.g., the corn header 200) may also be described with reference to a direction of travel 16.

In the illustrated embodiment, the agricultural harvester 100 includes a crop loss monitoring system 300 configured to detect an amount of crop loss during harvesting. Crop loss refers to desired agricultural product loss during a harvesting operation. For example, as the feed rollers of a row unit drive a corn stalk rearwardly and downwardly, corn kernels may be separated from the corn ear (e.g., due to dry conditions, due to excessive spacing between row unit deck plates, etc.). In order to make data driven decisions with regard to the harvesting operation, the crop loss monitoring system may indicate to the operator of the agricultural harvester that crop loss is occurring. For example, if crop loss is detected during the harvesting operation, the operator may determine that the crop is too dry to be harvested at that moment and pause the harvesting operation. In another example, crop loss detection may lead the operator to identify an undesirable configuration of the agricultural harvester, e.g. the deck plate gap is too large or the feed roller speed is too high, thereby enabling the operator to adjust the configuration. As a result, loss of crop during a harvesting operation may be reduced. In certain embodiments, each row unit includes a deck plate actuator 304 configured to control a spacing between the pair of deck plates of the row unit. For example, the deck plate actuator 304 may be controlled to adjust the spacing between the pair of deck plates to reduce the crop loss.

In the illustrated embodiment, the crop loss monitoring system 300 includes a controller 302 configured to determine the crop loss. As discussed in detail below, the controller 302 is configured to receive a left sensor signal from a left sensor indicative of crop particle impacts on a left side of a row unit of the agricultural harvester, in which the left sensor is configured to be positioned on the left side of the row unit. In addition, the controller 302 is configured to receive a right sensor signal from a right sensor indicative of crop particle impacts on a right side of the row unit, opposite the left side, in which the right sensor is configured to be positioned on the right side of the row unit. The controller 302 is also configured to determine whether the row unit is misaligned to a left side of a row of agricultural crops within a field or to a right side of the row of agricultural crops. Furthermore, the controller 302 is configured to determine crop loss based on feedback from the left sensor alone in response to determining the row unit is misaligned to the left side of the row of agricultural crops, and the controller 302 is configured to determine the crop loss based on feedback from the right sensor alone in response to determining the row unit is misaligned to the right side of the row of agricultural crops. Accordingly, the controller may disregard feedback from the sensor detecting crop particle impacts due to the misalignment of the row unit with the row of agricultural crops. As a result, the accuracy of the crop loss detection may be enhanced (e.g., as compared to a crop loss monitoring system having a controller configured to determine crop loss based on feedback from both sensors, or a crop loss monitoring system having a single sensor for the row unit). Furthermore, the controller 302 is configured to output a signal indicative of the crop loss. For example, in certain embodiments, the signal is indicative of instructions to control the deck plate actuator 304. Accordingly, the controller 302 may control the deck plate actuator 304 based on the crop loss, thereby reducing the crop loss.

In the illustrated embodiment, the controller 302 of the crop loss monitoring system 300 is communicatively coupled to the deck plate actuator 304. In certain embodiments, the controller 302 is an electronic controller having electrical circuitry configured to determine whether the row unit is misaligned with the row of agricultural crop, to determine crop loss, and to control the deck plate actuator 304. In the illustrated embodiment, the controller 302 includes a processor, such as the illustrated microprocessor 306, and a memory device 308. The controller 302 may also include one or more storage devices and/or other suitable components. The processor 306 may be used to execute software, such as software for determining row misalignment, determining crop loss, controlling the deck plate actuator 304, and so forth. Moreover, the processor 306 may include multiple microprocessors, one or more "general-purpose" microprocessors, one or more special-purpose microprocessors, and/or one or more application specific integrated circuits (ASICs), or some combination thereof. For example, the processor 306 may include one or more reduced instruction set (RISC) processors.

The memory device 308 may include a volatile memory, such as random access memory (RAM), and/or a nonvolatile memory, such as read-only memory (ROM). The memory device 308 may store a variety of information and may be used for various purposes. For example, the memory device 308 may store processor-executable instructions (e.g., firmware or software) for the processor 306 to execute, such as instructions for determining row misalignment, determining crop loss, controlling the deck plate actuator 304, and so forth. The storage device(s) (e.g., nonvolatile storage) may include ROM, flash memory, a hard drive, or any other suitable optical, magnetic, or solid-state storage medium, or a combination thereof. The storage device(s) may store data, instructions (e.g., software or firmware for controlling the deck plate actuator 304, etc.), and any other suitable data.

In the illustrated embodiment, the crop loss monitoring system 300 includes a user interface 310 communicatively coupled to the controller 302. The user interface 310 is configured to receive input from an operator and to provide information to the operator. The user interface 310 may include any suitable input device(s) for receiving input, such as a keyboard, a mouse, button(s), switch(es), knob(s), other suitable input device(s), or a combination thereof. In addition, the user interface 310 may include any suitable output device(s) for presenting information to the operator, such as speaker(s), indicator light(s), other suitable output device(s), or a combination thereof. In the illustrated embodiment, the user interface 310 includes a display 312 configured to present visual information to the operator. In certain embodiments, the display 312 may include a touchscreen interface configured to receive input from the operator.

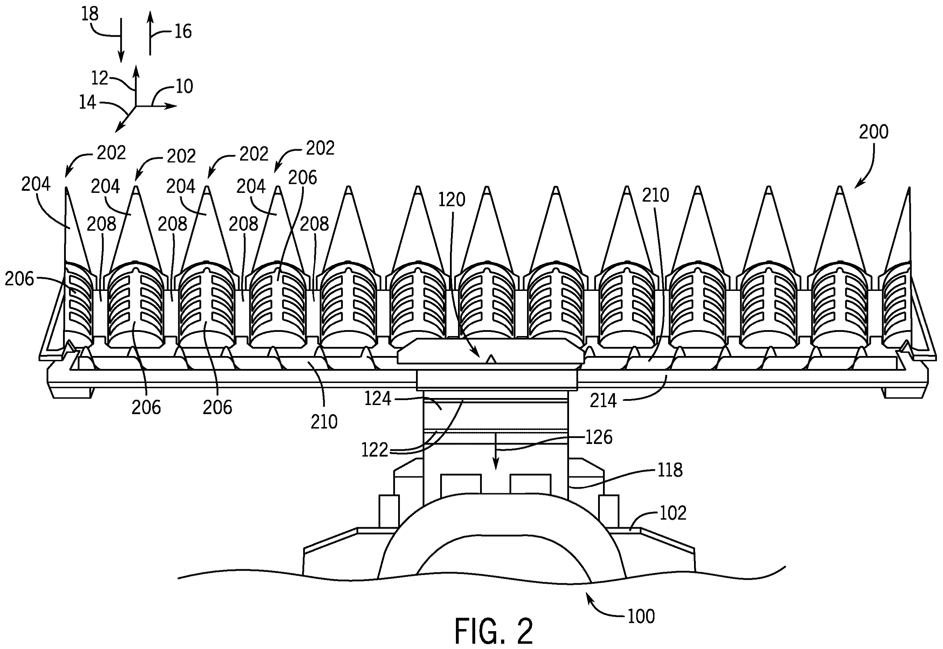

FIG. 2 is a perspective view of an embodiment of a corn header 200 that may be employed within the agricultural harvester 100 of FIG. 1. In the illustrated embodiment, the corn header 200 includes multiple crop engagement assemblies 202 distributed along the lateral axis 10 of the corn header 200. Each crop engagement assembly 202 includes a divider 204 and a hood 206. The dividers 204 are configured to divide rows of agricultural crop (e.g., corn), and the hoods 206 are configured to block crop material from entering internal components of the corn header 200. The crop engagement assemblies 202 may be evenly spaced along the lateral axis 10 of the corn header 200. While the corn header 200 moving along the direction of travel 16, the dividers 204 direct crop material from each row into a respective row unit 208. In addition, the hoods 206 facilitate alignment of the crop material with the row units 208. Accordingly, the hoods 206 direct the crop material through the row units 208.

The row units 208 are configured to separate ears of corn from stalks, thereby leaving bare stalks engaged with the soil (e.g., stubble). The ears of corn may be directed to one of a pair of augers 210 configured to convey the ears of corn inwardly along the lateral axis 10 of the corn header 200 to a feeder 120 at the lateral center of the corn header 200. As illustrated, the augers 210 extend along a substantial portion of the width of the corn header 200 (e.g., along the lateral axis 10 of the corn header 200). The augers 210 may be driven by a driving mechanism (e.g., electric motor, hydraulic motor, etc.). As the agricultural harvester 100 moves through the field, the dividers 204 direct the rows of crops/crop material into the row units 208. The row units 208 engage the crop material within the field and separate the ears of corn from the stalks, and the augers 210 transport the ears of corn to the feeder 120, which directs the ears of corn toward the inlet of the agricultural crop processing system. Each row unit 208 includes a pair of feed rollers which pull the stalk of each crop downwardly through the row unit during harvesting. As the stalks of the crops are pulled through the feed rollers, the ears are separated from the stalks and are conveyed toward the augers 210.

In addition to pulling the stalks of the crops downwardly, the pairs of feed rollers drive the stalks rearwardly (e.g., along a rearward direction 18 opposite the direction of travel 16) relative to a frame 214 of the corn header 200. Due to the movement of the agricultural harvester 100, the frame 214 of the corn header 200 is driven to move forwardly along the direction of travel 16. The difference between the forward speed of the corn header frame 214 relative to the field and the rearward speed of the stalks relative to the corn header frame 214 may be referred to as the conveyance speed. A conveyance speed of about zero may enhance the efficiency of the harvesting operation (e.g., by reducing the loads/forces applied to the ears of corn) and/or may enhance subsequent agricultural operation(s) (e.g., by enhancing the engagement of the bare stalks with the soil).

The feeder 120 is disposed within the feeder house 118, and the feeder 120 is configured to move the ears of corn from the corn header 200 toward the inlet of the agricultural crop processing system. In the illustrated embodiment, the feeder 120 includes multiple bars 122 coupled to one or more chains or belts. The chain(s) or belt(s) may be driven to rotate, thereby moving the bars 122 along the feeder floor 124 in a direction 126 toward the inlet of the agricultural crop processing system.

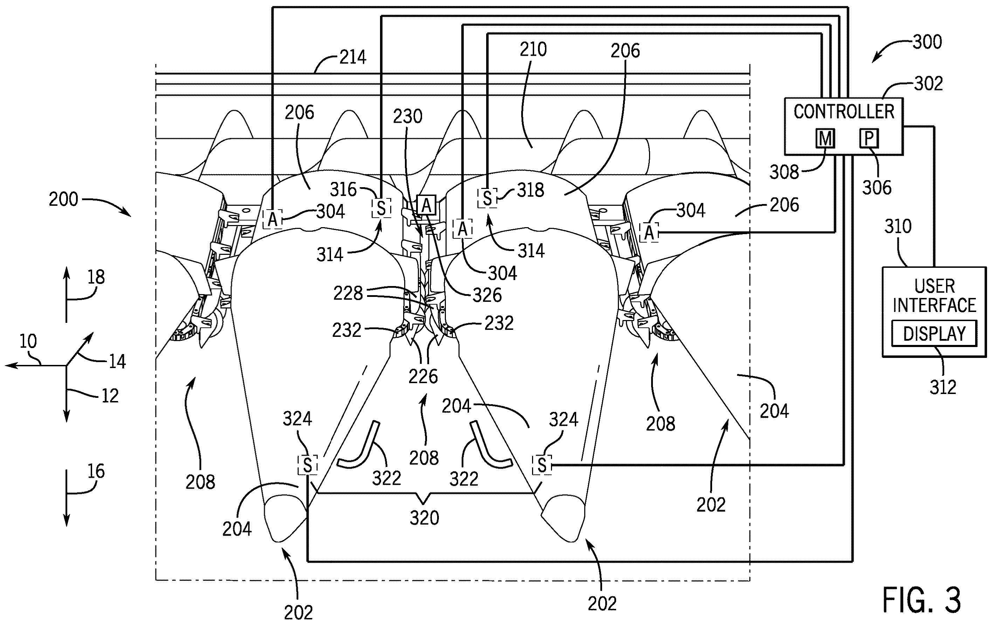

FIG. 3 is a perspective view of a portion of the corn header 200 of FIG. 2. As previously discussed, the corn header 200 includes multiple dividers 204 that direct the crops into the row units 208. Each row unit 208 is configured to separate the corn ear from the stalk, carry the corn ear toward the respective auger 210, and direct the stalk to the field. As illustrated, each row unit 208 includes a pair of feed rollers 226 configured to grip the stalk and to rotate in opposite directions, thereby driving the stalk rearwardly (e.g., along the rearward direction 18) and toward the field (e.g., vertically downward, below the corn header 200). Each row unit 208 also includes a pair of deck plates 228 positioned over the pair of feed rollers 226. Each deck plate 228 extends along the longitudinal axis 12 of the corn header 200, and the pair of deck plates 228 are separated from one another along the lateral axis 10 of the corn header 200 to define a gap 230. Furthermore, each row unit 208 includes a pair of chains 232 (e.g., with lugs) that are configured to drive or push the corn ear along the pair of deck plates 228 toward the respective auger 210. Each hood 206 is positioned rearward of each divider 204 and between adjacent row units 208 to cover various components, such as the deck plate actuators 304, linkage(s), and so forth. While each row unit includes a pair of feed rollers 226 and a pair of chains 232 in the illustrated embodiment, in other embodiments, at least one row unit may include other/additional suitable component(s) configured to facilitate separating the ear of corn from the stalk, directing the ear of corn to the respective auger, and directing the stalk toward the surface of the agricultural field.

In the illustrated embodiment, the crop loss monitoring system 300 includes a pair of sensors 314 communicatively coupled to the controller 302. The pair of sensors 314 includes a left sensor 316 positioned on a left side of a row unit 208, and a right sensor 318 positioned on the right side of the row unit 208. The left sensor 316 is configured to output a left sensor signal indicative of crop particle impacts on the left side of the row unit 208 during harvesting, and the right sensor 318 is configured to output a right sensor signal indicative of crop particle impacts on the right side of a row unit 208 during harvesting. For example, in the event kernels separate and scatter from an ear of corn upon the ear of corn impacting the deck plates 228 of the row unit 208, the pair of sensors 314 is configured to detect the impacts of the kernels (e.g., on the sensors 314). Each sensor of the pair of sensors 314 may include any suitable type(s) of sensing device(s). In some embodiments, the sensing device(s) may include a force sensor and/or a pressure sensor, such as a load cell, a strain gauge, a force-sensitive resistor, or a combination thereof. Furthermore, in certain embodiments, the sensing device(s) may include a sound detector, such as a microphone, configured to detect the sound produced by a particle impacting the hood.

In the illustrated embodiment, the crop loss monitoring system 300 includes a row alignment sensor assembly 320 communicatively coupled to the controller 302. In the illustrated embodiment, the row alignment sensor assembly 320 includes a pair of thin inwardly curved bars 322 that each protrude from the lower portion of a respective row divider 204. The row alignment sensor assembly 320 also includes one alignment sensor 324 positioned at a right row divider 204 and another alignment sensor 324 positioned at a left row divider 204. Each alignment sensor 324 is coupled to a respective thin inwardly curved bar 322. The alignment sensor assembly 320 is configured to monitor the alignment of the row unit 208 with a respective row of agricultural crops. For example, if the row unit 208 is misaligned to a right side of the row of agricultural crops, the left thin inwardly curved bar 322 may contact the row of agricultural crops. Accordingly, the left row alignment sensor 324 may output a sensor signal indicative of the right side misalignment to the controller 302. The row alignment sensors 324 may include any suitable type(s) of sensing device(s), including a force sensor and/or a pressure sensor, such as a load cell, a strain gauge, a force-sensitive resistor, or a combination thereof. Furthermore, in certain embodiments, the row alignment sensor assembly may be configured to monitor row alignment with non-contact sensor(s), such as camera(s), radar sensor(s), lidar sensor(s), ultrasonic sensor(s), other suitable type(s) of sensor(s), or a combination thereof.

While the row unit 208 is aligned with the row of agricultural crops, a centerline of the row unit, which is positioned at a midpoint between opposing crop engagement assemblies 202 with respect to the lateral axis 10, is aligned with a centerline extending through the row of agricultural crops. During the harvesting process, the operator or an automatic control system controls the agricultural harvester to attempt to align the row unit 208 with the row of agricultural crops to efficiently harvest the agricultural crops. The row unit 208 may become misaligned if the centerline of the row unit shifts to the left or the right of the centerline extending through the row of agricultural crops. As used herein with regard to misalignment, a row unit misaligned to the left side of the row of agricultural crops refers to the centerline of the row unit being positioned left of the centerline extending through the row of agricultural crops from the perspective of the row unit, and a row unit misaligned to the right side of the row of agricultural crops refers to the centerline of the row unit being positioned right of the centerline extending through the row of agricultural crops from the perspective of the row unit.

In the illustrated embodiment, each deck plate actuator 304 of the crop loss monitoring system 300 is configured to drive a respective pair of deck plates 228 of each row unit 208 to move toward and away from one another along the lateral axis 10 of the corn header 200 to change a size (e.g., width) of the gap 230 between the pair of deck plates 228. However, in other embodiments, a deck plate actuator may be configured to drive each deck plate to move, such that the number of deck plate actuators is equal to the number of deck plates. Furthermore, in certain embodiments, a single deck plate actuator may be configured to drive multiple pairs of deck plates to move, such that the deck plates of the multiple pairs move together. Each deck plate actuator 304 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof.

In the illustrated embodiment, a row unit angle actuator 326 of the crop loss monitoring system 300 is configured to tilt the row unit forward and backward about the longitudinal axis 12, such that the row unit may be oriented at varying angles relative to the ground. In certain embodiments, a row unit actuator may be configured to drive each respective row unit of the corn header 200 to rotate relative to the ground, such that the angles of the row units are individually controllable. Furthermore, in other embodiments, a single row unit actuator may be configured to drive all row units of the corn header 200 to rotate, such that the angles of all row units are the same relative to the ground. Each row unit angle actuator 326 may include any suitable type(s) of actuation device(s), such as hydraulic cylinder(s), pneumatic cylinder(s), hydraulic motor(s), pneumatic motor(s), electric motor(s), electric linear actuator(s), other suitable type(s) of actuation device(s), or a combination thereof.

In certain embodiments, the controller 302 is configured to receive the left sensor signal from the left sensor 316 indicative of crop particle impacts on the left side of the row unit, and the controller 302 is configured to receive the right sensor signal from the right sensor 318 indicative of crop particle impacts on the right side of the row unit. The controller 302 is also configured to determine whether the row unit is misaligned to the left side of the row of agricultural crops within the field or to the right side of the row of agricultural crops (e.g., based on feedback from the row alignment sensor assembly 320). Furthermore, the controller 302 is configured to determine crop loss based on feedback from the left sensor alone in response to determining the row unit is misaligned to the left side of the row of agricultural crops, and the controller 302 is configured to determine the crop loss based on feedback from the right sensor alone in response to determining the row unit is misaligned to the right side of the row of agricultural crops. Accordingly, the controller may disregard feedback from the sensor detecting crop particle impacts due to the misalignment of the row unit with the row of agricultural crops. As a result, the accuracy of the crop loss detection may be enhanced (e.g., as compared to a crop loss monitoring system having a controller configured to determine crop loss based on feedback from both sensors, or a crop loss monitoring system having a single sensor for the row unit).

Furthermore, the controller 302 is configured to output a signal indicative of the crop loss. For example, in certain embodiments, the signal is indicative of instructions to control the user interface 310 to present an indication (e.g., on the display 312) indicative of the crop loss. In such embodiments, the spacing between the pair of deck plates 228 may be manually controlled. For example, in certain embodiments, the operator may input a desired operational spacing into the user interface 310, and the user interface 310 may output a signal to the controller 302 indicative of the desired operational spacing. The controller 302, in turn, may control the deck plate actuator(s) 304 to establish the desired deck plate spacing. In certain embodiments, the deck plate actuator(s) may be omitted, and the operator may manually adjust the spacing between the deck plates. Furthermore, in certain embodiments, the signal indicative of the crop loss is indicative of instructions to control the deck plate actuator(s) 304. Accordingly, the controller 302 may control the deck plate actuator(s) 304 based on the crop loss, thereby reducing the crop loss.

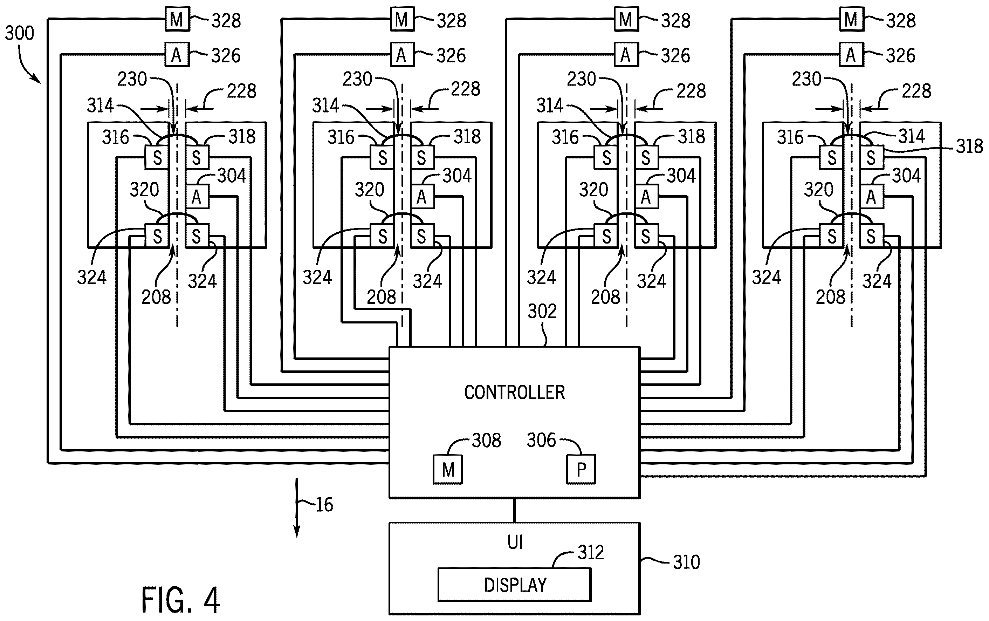

FIG. 4 is a block diagram of an embodiment of a crop loss monitoring system 300 that may be employed within the agricultural harvester of FIG. 1. As previously discussed, the controller 302 of the crop loss monitoring system 300 is communicatively coupled to the pair of sensors 314, the row alignment sensor assembly 320, and the deck plate actuators 304. In the illustrated embodiment, the controller 302 is configured to receive sensor signals from the sensor pair 314 and the row alignment sensor assembly 320 during operation of the agricultural harvester of FIG. 1. As previously discussed, while the corn header is in operation, each row unit harvests agricultural crop by driving stalks through the gap 230 between the deck plates 228, thereby removing ears of corn. The sensor pair 314 is positioned proximate to the deck plates and configured to detect kernels that are lost during the harvesting process. The left sensor 316 is configured to output a left sensor signal indicative of crop particle (e.g., kernel) impacts on the left side of the row unit 208, and the right sensor 318 is configured to output a right sensor signal indicative of crop particle (e.g., kernel) impacts on the right side of the row unit 208. In some embodiments, the controller 302 may determine the crop loss based on the number of crop particle (e.g., kernel) impacts (e.g., the higher number of impacts, the greater the crop loss).

In certain embodiments, the controller 302 is configured to identify misalignment between the row unit 208 and the row of agricultural crops based on feedback from the left and right sensors of the sensor pair 314. For example, as the row unit 208 moves along the direction of travel 16, corn stalks may be positioned toward one lateral side of the row unit due to misalignment between the row unit 208 and the row of agricultural crops. As a result, the corn ear may impact the hood on the left side of the row unit or the hood on the right side of the row unit. The impact may be detected by a respective sensor of the pair of sensors 314, thereby enabling the controller to identify the misalignment.

In certain embodiments, the controller 302 of the crop loss monitoring system 300 is configured to identify row misalignment by comparing the feedback from the sensors of sensor pair 314. For example, the controller 302 may determine that the row unit is misaligned to the left side of the row of agricultural crops in response to determining a number of crop particle impacts on the right side of the row unit over a period of time is greater than a number of crop particle impacts on the left side of the row unit over the period of time. In addition, the controller 302 may determine that the row unit is misaligned to the right side of the row of agricultural crops in response to determining the number of crop particle impacts on the left side of the row unit over the period of time is greater than the number of crop particle impacts on the right side of the row unit over the period of time. The number of particle impacts on the right side of the row unit may be determined based on feedback from the right sensor 318 of the sensor pair, and the number of particle impacts on the left side of the row unit may be determined based on feedback from the left sensor 316 of the sensor pair. Furthermore, the period of time may be any suitable value, such as 0.1 seconds, 0.5 seconds, 1 second, 2 seconds, 5 seconds, etc.

In certain embodiments, the controller 302 may be configured to determine row misalignment by determining a difference in the number of crop particle impacts on right/left sides of the row unit, and comparing the difference to a threshold value. The threshold value may be selected based on a number of factors, including but not limited to, environmental factors (e.g., crop moisture, crop density, etc.) and data collected during past harvesting operations. For example, in dry harvesting conditions, the threshold value may be higher than a threshold value selected for desired harvesting conditions because corn kernel scattering may be greater in dry conditions. To determine row unit misalignment, the controller may determine the difference between the number of particle impacts detected by the left and right sensors, and compare the difference to the threshold value. For example, the controller may determine the row unit is misaligned to the left side of the row of agricultural crops in response to determining a difference between the number of crop particle impacts on the right side of the row unit over a period of time and the number of crop particle impacts on the left side of the row unit over the period of time (e.g., the number of crop particle impacts on the right side of the row unit over the period of time minus the number of crop particle impacts on the left side of the row unit over the period of time) is greater than the threshold value. In addition, the controller may determine the row unit is misaligned to the right side of the row of agricultural crops in response to determining a difference between the number of crop particle impacts on the left side of the row unit over the period of time and the number of crop particle impacts on the right side of the row unit over the period of time (e.g., the number of crop particle impacts on the left side of the row unit over the period of time minus the number of crop particle impacts on the right side of the row unit over the period of time) is greater than the threshold value. As previously discussed, the number of particle impacts on the right side of the row unit may be determined based on feedback from the right sensor 318 of the sensor pair, and the number of particle impacts on the left side of the row unit may be determined based on feedback from the left sensor 316 of the sensor pair. Furthermore, the period of time may be any suitable value, such as 0.1 seconds, 0.5 seconds, 1 second, 2 seconds, 5 seconds, etc.

In certain embodiments, the controller 302 may be configured to determine row unit misalignment based on the frequency response of each sensor signal from the sensor pair 314. The frequency response of the sensor signal may be determined by any suitable signal processing technique, such as a Fast Fourier Transform (FFT) algorithm. In certain embodiments, the controller may receive sensor signals individually from the left and right sensors, convert each sensor signal to a frequency response (e.g., frequency domain form), and determine the row alignment by analyzing the frequency response. For example, the frequency response may be compared to a sample frequency response corresponding to corn kernel impacts. A frequency response that does not correspond to corn kernel impacts may indicate that a corn ear has impacted on a respective side of the row unit, thereby indicating row unit misalignment. For example, the controller may determine the row unit is misaligned to the left side of the row of agricultural crops in response to determining a frequency response of the right sensor signal is inconsistent with crop particle impacts on the right side of the row unit, and the controller may determine the row unit is misaligned to the right side of the row of agricultural crops in response to determining a frequency response of the left sensor signal is inconsistent with crop particle impacts on the left side of the row unit.

Furthermore, in certain embodiments, the controller 302 may be configured to determine row unit misalignment based on feedback from the row alignment sensor assembly 320. As previously discussed, the row alignment sensor assembly 320 may monitor alignment of the row unit 208 with a respective row of agricultural crops, and the controller 302 may determine that the row unit 208 is misaligned with the row of agricultural crops during the harvesting operation based on feedback from the row alignment sensor assembly 320. For example, the controller 302 may determine the row unit is misaligned to the left side of the row of agricultural crops based on feedback from the row alignment sensor assembly 320, and the controller 302 may determine the row unit is misaligned to the right side of the row of agricultural crops based on the feedback from the row alignment sensor assembly 320. In embodiments in which the controller identifies row unit misalignment based on feedback from the sensor pair 314, the row alignment sensor assembly may be omitted. In such embodiments, the controller may use the feedback from the sensor pair to control movement of the agricultural harvester through the field, such that the row units are aligned with the rows of agricultural crops.

The controller 302 may be configured to determine row unit misalignment by any of the techniques discussed above, or any combination thereof. In response to determining the row unit is misaligned with the row of agricultural crops, the controller 302 may determine crop loss based on feedback from only one of the pair of sensors (e.g., disregarding crop particle impacts detected by the other sensor). For example, in response to determining the row unit 208 is misaligned to the left side of the row of agricultural crops, the controller 302 may determine the crop loss based on feedback from the left sensor alone (e.g., only from the left sensor signal from the left sensor of the sensor pair 314). In addition, in response to determining the row unit 208 is misaligned to the right side of the row of agricultural crops, the controller 302 may determine the crop loss based on feedback from the right sensor alone (e.g., only from the right sensor signal from the right sensor of the sensor pair). The controller 302 may then output a signal indicative of the crop loss. For example, the signal may include instructions to control the user interface 310 to present an indication of the crop loss, which may inform the operator that the row unit, or multiple row units, is/are misaligned with the respective row(s) of agricultural crops. Accordingly, the operator may adjust the operating configuration of the agricultural harvester based on the identified misalignment. For example, in certain embodiments, the crop loss may be presented to the operator during the harvesting operation via the user interface display 312. Additionally, or alternatively, the crop loss may be displayed as an average crop loss over the harvesting operation. In addition, the controller 302 may be configured to store crop loss data to generate historical data that may be useful to improve operational efficiency in future harvesting operations.

In certain embodiments, the crop loss may be determined as a rolling average value based on the alignment/misalignment of the row unit at any time during the harvesting operation. For example, the controller 302 may determine the crop loss based on a number of crop particle impacts on the left side of the row unit over a period of time (e.g., as determined based on feedback from the left sensor) in response to determining the row unit is misaligned to the left side of the row of agricultural crops. In addition, the controller 302 may determine the crop loss based on a number of crop particle impacts on the right side of the row unit over the period of time (e.g., as determined based on feedback from the right sensor) in response to determining the row unit is misaligned to the right side of the row of agricultural crops. Furthermore, the controller 302 may determine the crop loss based on an average of the number of crop particle impacts on the left side of the row unit over the period of time and the number of crop particle impacts on the right side of the row unit over the period of time in response to determining the row unit is not misaligned to the left side of the row of agricultural crops and not misaligned to the right side of the row of agricultural crops (e.g., the row unit is aligned with the row of agricultural crops). Alternatively, in response to the row unit being aligned with the row of agricultural crops (e.g., the number of crop particle impacts on the right side of the row unit over the period of time being equal to the number of crop particle impacts on the left side of the row unit over the period of time), the controller 302 may determine the crop loss based on either of the number of crop particle impacts on the right side of the row unit over the period of time or the number of crop particle impacts on the left side of the row unit over the period of time. The period of time may be any suitable value, such as 0.1 seconds, 0.5 seconds, 1 second, 2 seconds, 5 seconds, etc.

While the determination of alignment/misalignment of a single row unit with a row of agricultural crops is disclosed above, in certain embodiments, the controller 302 of the crop loss monitoring system 300 may determine multiple row unit alignments/misalignments for multiple row units of the corn header (e.g. individually and/or collectively). For example, in certain embodiments, the controller may determine row unit alignment/misalignment for each row unit in which a respective sensor pair 314 is positioned proximate to the row unit. The alignment/misalignment may be determined individually (e.g., for each respective row unit) or collectively (e.g., based on a average of the row units). For example, if the controller determines that three row units are misaligned to the left and one row unit is misaligned to the right, the controller may determine that the row units are misaligned to the left. Indeed, the controller may disregard a row unit alignment/misalignment determination that disagrees with the majority of the row unit alignment/misalignment determinations. In addition, the controller 302 may determine the crop loss for each row unit in which a respective sensor pair 314 is positioned proximate to the row unit. The crop loss may be determined individually (e.g., for each respective row unit) or collectively (e.g., based on an average of the row units). In addition, the controller may disregard a crop loss determination for a row unit that differs from the average by more than a threshold value.

In certain embodiments, the controller 302 may be configured to control the deck plate gap 230 based on the crop loss. For example, a plate gap that is wider than a target plate gap may cause corn kernels to be separated from the ear as the ear engages the deck plates. Accordingly, the controller may control the deck plate actuator(s) 304 based on the crop loss, thereby reducing the crop loss. In embodiments in which the crop loss for multiple row units is determined and the row units have independently controllable deck plate spacings, the controller may control the deck plate spacings for the respective row units individually. However, in other embodiments, the controller may control the deck plate spacing collectively (e.g., such that each row unit has the same deck plate spacing).

In certain embodiments, the feed rollers are driven to rotate by a drive shaft that is driven to rotate by an engine of the agricultural harvester. For example, the drive shaft may be coupled to a transmission that is driven by the engine of the agricultural harvester, or the drive shaft may be coupled to a hydraulic motor that is powered by a hydraulic pump coupled to the engine. Furthermore, in certain embodiments, each row unit may have an independently controllable feed roller motor 328. In certain embodiments, the controller 302 is configured to control the speed of the feed rollers 226 based on the crop loss. For example, the controller 302 may control the rotational speed of the feed rollers to drive the corn stalks through the deck plate gap 230 at a target speed, thereby reducing separation of the kernels from the ear as the ear engages the deck plates. Accordingly, the controller may control the feed roller rotation rate based on the crop loss, thereby reducing the crop loss. In embodiments in which the crop loss for multiple row units is determined and the row units have independently controllable feed roller motors 328, the controller may control the feed roller speed for the respective row units individually. However, in other embodiments, the controller may control the feed roller speed collectively (e.g., by controlling the hydraulic motor coupled to the drive shaft), such that each row unit has the same feed roller speed.

Furthermore, in certain embodiments, the controller 302 may be configured to control the angle of the row unit 208 based on the crop loss. For example, the row unit may be tilted forward or backward to a target pitch, which is configured to reduce separation of kernels from the ear of corn as the ear engages the deck plates. Accordingly, the controller may control the row unit angle actuator(s) 326 based on the crop loss, thereby reducing the crop loss. In embodiments in which the crop loss for multiple row units is determined and the row units have independently controllable row unit angles, the controller may control the row unit angle for the respective row units individually. However, in other embodiments, the controller may control row unit angles collectively (e.g., such that all row units of the header have the same row unit angle). Furthermore, in certain embodiments, the controller may be configured to control other parameters based on the crop loss (e.g. alone or in combination with the deck plate spacing, feed roller speed, and/or row unit angle), such as the speed of the agricultural harvester, the height of the header above the ground, other suitable parameter(s), or a combination thereof.

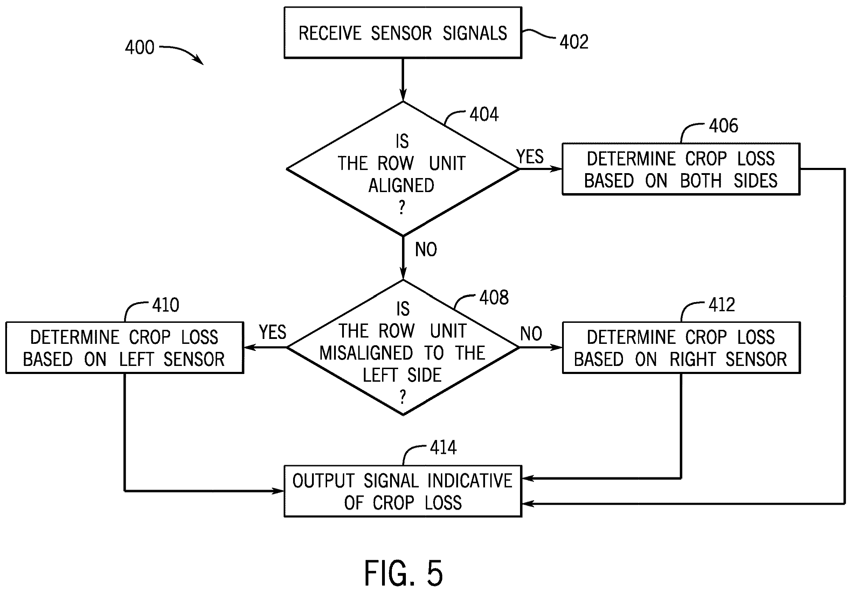

FIG. 5 is a flow diagram of an embodiment of a method 400 for monitoring crop loss during the operation of an agricultural harvester 100. The method 400 may be performed by the controller disclosed above with reference to FIG. 4, by one or more other suitable controllers, or a combination thereof. Furthermore, the steps of the method 400 may be performed in the order disclosed below or in any other suitable order. In addition, in certain embodiments, one or more steps of method 400 may be omitted, and/or the method may include one or more additional steps.

In the illustrated embodiment, the method 400 includes receiving a left sensor signal from the left sensor indicative of crop particle impacts on the left side of the row unit and receiving a right sensor signal from the right sensor indicative of crop particle impacts on the right side of the row unit, as represented by block 402. Further, the method 400 includes determining whether the row unit is aligned with a row of agricultural crops, as represented by block 404. In response to determining the row unit is not misaligned with the row of agricultural crops, the method 400 proceeds to block 406, which includes determining the crop loss (e.g., based on an average of the number of crop particle impacts on the left side of the row unit over a period of time and the number of crop particle impacts on the right side of the row unit over the period of time).

Otherwise, the method 400 proceeds to block 408, which includes determining whether the row unit is misaligned to the left side of the row of agricultural crops or to the right side of the row of agricultural crops. In response to determining the row is misaligned to the left side, the method 400 proceeds to block 410. Block 410 includes determining the crop loss based on feedback from the left sensor alone. In response to determining the row is misaligned to the right side, the method 400 proceeds to block 412. Block 412 includes determining the crop loss based on feedback from the right sensor alone. Furthermore, the method 400 includes outputting a signal indicative of the crop loss (e.g., to the user interface and/or to the deck plate actuator(s)), as represented by block 414.

## Claims

1. A crop loss monitoring system (300) for an agricultural harvester (100), **characterized in that** the crop loss monitoring system (300) comprises:
a controller (302) comprising a memory (308) and a processor (306), wherein the controller (302) is configured to:
receive a left sensor signal from a left sensor (316) indicative of crop particle impacts on a left side of a row unit (208) of the agricultural harvester (100), wherein the left sensor (316) is configured to be positioned on the left side of the row unit (208);
receive a right sensor signal from a right sensor (318) indicative of crop particle impacts on a right side of the row unit (208), opposite the left side, wherein the right sensor (318) is configured to be positioned on the right side of the row unit (208);
determine whether the row unit (208) is misaligned to a left side of a row of agricultural crops within a field or to a right side of the row of agricultural crops;
determine crop loss based on feedback from the left sensor (316) alone in response to determining the row unit (208) is misaligned to the left side of the row of agricultural crops, and determine the crop loss based on feedback from the right sensor (318) alone in response to determining the row unit (208) is misaligned to the right side of the row of agricultural crops; and
output a signal indicative of the crop loss.

2. The crop loss monitoring system (300) of claim 1, wherein the controller (302) is configured to:
determine the row unit (208) is misaligned to the left side of the row of agricultural crops in response to determining a number of crop particle impacts on the right side of the row unit (208) over a period of time is greater than a number of crop particle impacts on the left side of the row unit (208) over the period of time; and
determine the row unit (208) is misaligned to the right side of the row of agricultural crops in response to determining the number of crop particle impacts on the left side of the row unit (208) over the period of time is greater than the number of crop particle impacts on the right side of the row unit (208) over the period of time.

3. The crop loss monitoring system (300) of claim 1, wherein the controller (302) is configured to:
determine the row unit (208) is misaligned to the left side of the row of agricultural crops in response to determining a difference between a number of crop particle impacts on the right side of the row unit (208) over a period of time and a number of crop particle impacts on the left side of the row unit (208) over the period of time is greater than a threshold value; and
determine the row unit (208) is misaligned to the right side of the row of agricultural crops in response to determining a difference between the number of crop particle impacts on the left side of the row unit (208) over the period of time and the number of crop particle impacts on the right side of the row unit (208) over the period of time is greater than the threshold value.

4. The crop loss monitoring system (300) of any of claims 1-3, wherein the controller (302) is configured to:
determine the crop loss based on a number of crop particle impacts on the left side of the row unit (208) over a period of time in response to determining the row unit (208) is misaligned to the left side of the row of agricultural crops;
determine the crop loss based on a number of crop particle impacts on the right side of the row unit (208) over the period of time in response to determining the row unit (208) is misaligned to the right side of the row of agricultural crops; and
determine the crop loss based on an average of the number of crop particle impacts on the left side of the row unit (208) over the period of time and the number of crop particle impacts on the right side of the row unit (208) over the period of time in response to determining the row unit (208) is not misaligned to the left side of the row of agricultural crops and not misaligned to the right side of the row of agricultural crops.

5. The crop loss monitoring system (300) of any of claims 1 or 4, wherein the controller (302) is configured to:
determine the row unit (208) is misaligned to the left side of the row of agricultural crops in response to determining a frequency response of the right sensor signal is inconsistent with crop particle impacts on the right side of the row unit (208); and
determine the row unit (208) is misaligned to the right side of the row of agricultural crops in response to determining a frequency response of the left sensor signal is inconsistent with crop particle impacts on the left side of the row unit (208).

6. The crop loss monitoring system (300) of any of claims 1-5, wherein the signal indicative of the crop loss comprises instructions to control a user interface (310) to present an indication of the crop loss.

7. The crop loss monitoring system (300) of any of claims 1-6, wherein the signal indicative of the crop loss comprises instructions to control:
a deck plate actuator (304) of the agricultural harvester (100);
a feed roller motor (328) of the agricultural harvester (100);
a row unit angle actuator (326) of the agricultural harvester (100); or
a combination thereof.

8. The crop loss monitoring system (300) of claim 7, comprising the deck plate actuator (304) configured to control spacing between a pair of deck plates (228) of the row unit (208) of the agricultural harvester (100), wherein the instructions to control the deck plate actuator (304) are based on the crop loss.

9. The crop loss monitoring system (300) of any of claims 1, 4, or 6-8, wherein the controller (302) is configured to:
determine the row unit (208) is misaligned to the left side of the row of agricultural crops based on feedback from a row alignment sensor assembly (320); and
determine the row unit (208) is misaligned to the right side of the row of agricultural crops based on the feedback from the row alignment sensor assembly (320).

10. A method for monitoring crop loss during operation of an agricultural harvester (100), **characterized in that** the method comprises:
receiving, via a controller (302) comprising a memory (308) and a processor (306), a left sensor signal from a left sensor (316) indicative of crop particle impacts on a left side of a row unit (208) of the agricultural harvester (100), wherein the left sensor (316) is configured to be positioned on the left side of the row unit (208);
receiving, via the controller (302), a right sensor signal from a right sensor (318) indicative of crop particle impacts on a right side of the row unit (208), opposite the left side, wherein the right sensor (318) is configured to be positioned on the right side of the row unit (208);
determining, via the controller (302), whether the row unit (208) is misaligned to a left side of a row of agricultural crops within a field or to a right side of the row of agricultural crops;
determining, via the controller (302), crop loss based on feedback from the left sensor (316) alone in response to determining the row unit (208) is misaligned to the left side of the row of agricultural crops, and determining the crop loss based on feedback from the right sensor (318) alone in response to determining the row unit (208) is misaligned to the right side of the row of agricultural crops; and
outputting, via the controller (302), a signal indicative of the crop loss.

11. The method of claim 10, wherein determining whether the row unit (208) is misaligned to the left side of a row of agricultural crops or to the right side of the row of agricultural crops, comprises:
determining the row unit (208) is misaligned to the left side of the row of agricultural crops in response to determining a number of crop particle impacts on the right side of the row unit (208) over a period of time is greater than a number of crop particle impacts on the left side of the row unit (208) over the period of time; and
determining the row unit (208) is misaligned to the right side of the row of agricultural crops in response to determining the number of crop particle impacts on the left side of the row unit (208) over the period of time is greater than the number of crop particle impacts on the right side of the row unit (208) over the period of time.

12. The method of claim 10, wherein determining whether the row unit (208) is misaligned to the left side of a row of agricultural crops or to the right side of the row of agricultural crops, comprises:
determining the row unit (208) is misaligned to the left side of the row of agricultural crops in response to determining a difference between a number of crop particle impacts on the right side of the row unit (208) over a period of time and a number of crop particle impacts on the left side of the row unit (208) over the period of time is greater than a threshold value; and
determining the row unit (208) is misaligned to the right side of the row of agricultural crops in response to determining a difference between the number of crop particle impacts on the left side of the row unit (208) over the period of time and the number of crop particle impacts on the right side of the row unit (208) over the period of time is greater than the threshold value.

13. The method of any of claims 10-12, wherein:
determining the crop loss based on the feedback from the left sensor (316) alone comprises determining the crop loss based on a number of crop particle impacts on the left side of the row unit (208) over a period of time; and
determining the crop loss based on the feedback from the right sensor (318) alone comprises determining the crop loss based on a number of crop particle impacts on the right side of the row unit (208) over the period of time.

14. The method of claim 13, comprising determining, via the controller (302), the crop loss based on an average of the number of crop particle impacts on the left side of the row unit (208) over the period of time and the number of crop particle impacts on the right side of the row unit (208) over the period of time in response to determining the row unit (208) is not misaligned to the left side of the row of agricultural crops and not misaligned to the right side of the row of agricultural crops.

15. The method of any of claims 10 or 13-14, wherein determining whether the row unit (208) is misaligned to the left side of a row of agricultural crops or to the right side of the row of agricultural crops, comprises:
determining the row unit (208) is misaligned to the left side of the row of agricultural crops in response to determining a frequency response of the right sensor signal is inconsistent with crop particle impacts on the right side of the row unit (208); and
determining the row unit (208) is misaligned to the right side of the row of agricultural crops in response to determining a frequency response of the left sensor signal is inconsistent with crop particle impacts on the left side of the row unit (208).
